# EUROPÄISCHE PATENTSCHRIFT

(11) **EP 3 636 520 B1**
(45) Veröffentlichungstag und Bekanntmachung des Hinweises auf die Patenterteilung: **21.07.2021**
(21) Anmeldenummer: 19197281.9
(22) Anmeldetag: 13.09.2019
(51) Int. Cl.: B62D 49/06, B62D 37/04

(54) **BALLASTIERVORRICHTUNG UND LANDWIRTSCHAFTLICHES FAHRZEUG**
BALLASTING DEVICE AND AGRICULTURAL VEHICLE
DISPOSITIF DE BALLASTAGE ET VÉHICULE AGRICOLE

(30) Priorität: 10.10.2018 DE 102018217286
(43) Veröffentlichungstag der Anmeldung: 15.04.2020
(73) Patentinhaber: Deere & Company, Moline, IL 61265 (US)
(72) Erfinder: Letscher, Jens, 68163 Mannheim (DE); Riemer, Thorben, 68163 Mannheim (DE)
(74) Vertreter: Stein, Stefan

(56) Entgegenhaltungen:
- WO-A2-2010/071380
- FR-A- 2 815 319

## Beschreibung

Die Erfindung betrifft eine Ballastiervorrichtung für ein landwirtschaftliches Fahrzeug und ein landwirtschaftliches Fahrzeug mit einer Ballsatiervorrichtung.

Es ist bekannt, dass landwirtschaftliche Fahrzeuge, beispielsweise Schlepper oder Traktoren oder Zugmaschinen, bei Arbeiten mit Anbaugeräten, insbesondere schweren Heck-Anbaugeräten, wie z.B. einem Pflug, zum Ausgleich ballastiert, also mit einer Ballastiervorrichtung oder einem Ballastiergewicht am vorderen Ende des Fahrzeugs bestückt werden. Üblicherweise sind die Ballastiervorrichtungen oder -gewichte an einem vorgegebenen Platz am vorderen und/oder hinteren Teil des Fahrzeugrumpfs angeordnet und fest installiert. Es ist oftmals mit erheblichem Aufwand verbunden und nicht ohne aufwändige Gerätschaften (Gabelstapler, Kran, Hubvorrichtung etc.) realisierbar, die Ballastiervorrichtungen oder -gewichte zu montieren bzw. zu demontieren. Darüber hinaus bieten die bekannten Ballastiergewichte oder Ballastiervorrichtungen nur wenige und/oder aufwändige Möglichkeiten, die Ballastierung bzw. die durch eine Ballastierung auf die Vorderachse aufgebrachte Zusatzlast zu variieren und/oder den sich ändernden Gegebenheiten bzw. Arbeitsbedingungen anzupassen. Dies führt in der Praxis oftmals dazu, dass meist mit dem gleichen Ballastiergewicht gearbeitet wird und dadurch das landwirtschaftliche Fahrzeug nicht optimal ballastiert unterwegs ist. Dies kann ferner weitere Nachteile mit sich führen, beispielsweise einen höheren Kraftstoffverbrauch und/oder ein höheres Gefahrenpotential im Strassenverkehr.

Aus dem Stand der Technik sind Lösungen bekannt, mit denen versucht wird diese Probleme zu beheben, indem beispielsweise eine Ballastierung durch ein Ballastiergewicht dahingehend den geforderten und vorherrschenden Arbeitsbedingungen angepasst wird, dass die Anordnung des Ballastiergewichts am Fahrzeug variabel ist und insbesondere eine Verschiebung des Ballastiergewichts in Längsrichtung des Fahrzeugs ermöglicht wird. Die EP 2 186 713 A2 offenbart eine verstellbare Ballastiervorrichtung an einem landwirtschaftlichen Fahrzeug, wobei die Ballastiervorrichtung von den Unterlenkern einer Dreipunktanhängevorrichtung aufnehmbar ist. Ausserdem sind Schwenkmittel vorgesehen, mittels welcher die Ballastiervorrichtung um eine Schwenkachse verschwenkbar und in Längsrichtung des Fahrzeugs verstellbar ist. Das Ballastiergewicht ist hierbei in einem aufgenommenen Zustand der Ballastiervorrichtung in Bezug einen Abstand des Schwerpunkts der Ballastiervorrichtung vom Fahrzeug zwischen einer fahrzeugnahen Position und einer fahrzeugferne Position bewegbar. Aber auch die aus dem Stand der Technik bekannten Lösungen, insbesondere die in der EP 2 186 713 A2 offenbarte Ballastiervorrichtung, weisen die bereits genannten Nachteile auf.

Weitere Ballsatiervorrichtungen sind aus den Druckschriften FR 2815319 A1 und WO 2010/071380 A2 bekannt.

Die der Erfindung zugrunde liegende Aufgabe wird somit darin gesehen, eine Ballastiervorrichtung und ein landwirtschaftliches Fahrzeug vorzuschlagen, durch welches die vorgenannten Probleme und/oder Nachteile zumindest teilweise überwunden werden. Insbesondere wird die der Erfindung zugrunde liegende Aufgabe darin gesehen, eine Ballastiervorrichtung und ein landwirtschaftliches Fahrzeug vorzuschlagen, durch welche der Schwerpunkt der Ballastiervorrichtung verändert und/oder an die sich ändernden Arbeitsbedingungen angepasst werden kann und/oder das Gefahrenpotential im Straßenverkehr reduziert und/oder konstruktiv einfach ausgestaltet ist.

Diese Aufgabe wird durch eine Ballastiervorrichtung mit den Merkmalen des Anspruchs 1 und ein landwirtschaftliches Fahrzeug mit den Merkmalen des Anspruchs 11 gelöst. Die abhängigen Ansprüche beziehen sich auf besonders vorteilhafte Ausführungsformen der Erfindung.

Erfindungsgemäß wird eine Ballastiervorrichtung für ein landwirtschaftliches Fahrzeug mit einem Ballastierkörper und einem ersten Ballastierarm und einem zweiten Ballastierarm vorgeschlagen. Der erste Ballastierarm ist mit dem einen Ende um eine erste Lagerachse schwenkbar am Ballastierkörper gelagert und am anderen Ende des ersten Ballastierarms ist ein erstes Ballastiergewicht angeordnet, insbesondere lösbar verbunden oder befestigt. Der zweite Ballastierarm ist ebenfalls mit dem einen Ende um eine zweite Lagerachse schwenkbar am Ballastierkörper gelagert und an dessen anderen Ende ist ein zweites Ballastiergewicht angeordnet, insbesondere lösbar verbunden oder befestigt.

Im Weiteren weist die Ballastiervorrichtung, insbesondere der Ballastierkörper, eine Aufnahmeeinrichtung zur Aufnahme der Ballastiervorrichtung mittels einer Dreipunktanhängevorrichtung des landwirtschaftlichen Fahrzeugs auf. Das erste Ballastiergewicht ist mittels des ersten Ballastierarms und das zweite Ballastiergewicht ist mittels des zweiten Ballastierarms verstellbar, bevorzugt einstellbar und/oder verschwenkbar. Im Speziellen sind der erste und zweite Ballastierarm und somit das erste und zweite Ballastiergewicht gegeneinander verschwenkbar bzw. mit anderen Worten, das erste und zweite Ballastiergewicht sind mittels des ersten und zweiten Ballastierarms gegeneinander verschwenkbar. Es kann also eine Position des ersten und zweiten Ballastiergewichts relativ zueinander und/oder in Bezug auf den Ballastierkörper mittels des ersten und/oder zweiten Ballastierarms verstellbar sein, bevorzugt einstellbar und/oder verschwenkbar, besonders bevorzugt gegeneinander verschwenkbar sein.

Der erste und/oder zweite Ballastierarm können im Speziellen langgestreckt sein, also eine Ausdehnung im Wesentlichen entlang der jeweiligen Längsachse des ersten und/oder zweiten Ballastierarm aufweisen. Ausserdem können die Geometrie und/oder der Aufbau des ersten und zweiten Ballastierarms gleich sein. Der erste Ballastierarm ist mit dem einen Ende, beispielsweise einem ersten Ende, um die erste Lagerachse schwenkbar am Ballastierkörper gelagert, kann also mit dem einen Ende am Ballastierkörper angelenkt sein. Der zweite Ballastierarm ist mit dem einen Ende, beispielsweise einem ersten Ende, um die zweite Lagerachse schwenkbar am Ballastierkörper gelagert, kann also ebenfalls mit dem einen Ende am Ballastierkörper angelenkt sein. Am jeweils anderen Ende, beispielsweise einem jeweils zweiten Ende, des ersten Ballastierarms ist das erste Ballastiergewicht und des zweiten Ballastierarm ist das zweite Ballastiergewicht angeordnet.

Die Ballastiervorrichtung kann an der Aufnahmeeinrichtung von der Dreipunktanhängevorrichtung aufgenommen werden. Die Aufnahmeeinrichtung kann hierzu eins, zwei oder mehrere Aufnahmeelemente, beispielsweise Aufnahmebolzen, und/oder ein Aufnahmelager aufweisen. Das Aufnahmeelement kann von einem Unterlenker der Dreipunktanhängevorrichtung aufgenommen werden und/oder schwenkbar an die Dreipunktanhängevorrichtung koppelbar sein, insbesondere kann das Aufnahmeelement koaxial zu einer Schwenkachse ausgerichtet sein. Ebenso kann das Aufnahmelager von einem Oberlenker der Dreipunktanhängevorrichtung aufgenommen werden und/oder an den Oberlenker koppelbar sein, insbesondere schwenkbar an den Oberlenker koppelbar sein. Das Aufnahmelager kann vorzugsweise ein Lenkblech sein, insbesondere ein dreieckförmiges Lenkblech, das zwei gegenüberliegende Lenkblechseiten aufweist. Somit kann sich der Oberlenker zwischen den beiden Lenkblechhälften erstrecken und beispielsweise mittels eines Bolzens oder Stifts an diese angelenkt sein. Die Aufnahmeeinrichtung, insbesondere das Aufnahmeelement und/oder das Aufnahmelager, können lösbar mit dem Ballastierkörper verbunden oder am Ballastierkörper befestigt sein oder als ein Teil des Ballastierkörpers ausgebildet sein. Der Ballastierkörper und die Aufnahmeeinrichtung, insbesondere das Aufnahmeelement und/oder das Aufnahmelager, können einstückig ausgebildet sein. Im Speziellen kann die Aufnahmeeinrichtung zwei Aufnahmeelemente umfassen, die als zwei seitlich (seitlich im Sinne von quer zu einer Fahrzeuglängsachse) am Ballastierkörper angeordnete Aufnahmebolzen ausgebildet sein können, und die von zwei Unterlenkern der Dreipunktanhängevorrichtung aufnehmbar und/oder schwenkbar an die Dreipunktanhängevorrichtung koppelbar sind. Die Schwenkachse wird dabei durch die zwei seitlichen Aufnahmebolzen definiert, die von den Unterlenkern der Dreipunktanhängevorrichtung gehalten werden. Die Aufnahmebolzen können koaxial zur gemeinsamen Schwenkachse ausgerichtet sein.

Die Dreipunktanhängevorrichtung kann insbesondere ein Dreipunkt-Kraftheber sein, der beispielsweise als ein Heckhubwerk an der Rückseite des landwirtschaftlichen Fahrzeugs und/oder ein Fronthubwerk an der Front des landwirtschaftlichen Fahrzeugs ausgebildet sein kann. Die Ballastiervorrichtung kann von den Unterlenkern und dem Oberlenker, insbesondere einem längeninvarianten Oberlenker, der Dreipunktanhängevorrichtung aufgenommen werden und/oder schwenkbar an den Anlenkpunkten der Unterlenker und/oder des Oberlenkers lagerbar und/oder koppelbar sein. Der Oberlenker kann aber auch ein längenverstellbarer Oberlenker sein, insbesondere derart, dass durch eine Längenänderung des Oberlenkers ein Verschwenken der Ballastiervorrichtung, insbesondere um die Schwenkachse, erzielbar ist.

Wesentlich für die Erfindung ist, dass das erste Ballastiergewicht mittels des ersten Ballastierarms und das zweite Ballastiergewicht mittels des zweiten Ballastierarms verstellbar sind, bevorzugt eingestellbar und/oder verschwenkbar sind, derart, dass der Schwerpunkt der Ballastiervorrichtung, insbesondere eine Schwerpunktslage und/oder ein Abstand des Schwerpunkts der Ballastiervorrichtung in Bezug auf den Ballastierkörper, verstellbar und/oder einstellbar ist. Im Speziellen können das erste und zweite Ballastiergewicht mittels des ersten und zweiten Ballastierarms derart gegeneinander verschwenkbar sein, dass der Schwerpunkt der Ballastiervorrichtung, insbesondere eine Schwerpunktslage und/oder ein Abstand des Schwerpunkts der Ballastiervorrichtung in Bezug auf den Ballastierkörper, verstellbar und/oder einstellbar ist. Das Verstellen bzw. die Schwenkbewegung des ersten und/oder zweiten Ballstierarm kann hierbei manuell, beispielsweise mittels Menschenkraft, oder automatisiert erfolgen. Mit anderen Worten, der erste und zweite Ballastierarm können von einer Offenstellung, in welcher der Schwerpunkt der Ballastiervorrichtung keinen oder einen minimalen Abstand zum Ballastierkörper aufweist, in eine Schliessstellung, in der der Schwerpunkt der Ballastiervorrichtung einen maximalen Abstand zum Ballastierkörper aufweist, verstellbar, bevorzug einstellbar oder verschwenkbar, besonders bevorzugt gegeneinander verschwenkbar sein, und umgekehrt. In der Offenstellung können der erste und zweite Ballastierarm parallel und/oder koaxial zur Schwenkachse ausgerichtet sein, sodass das erste und zweite Ballastiergewicht diametral zueinander angeordnet sind. In der Schliessstellung können der erste und zweite Ballastierarm parallel zueinander, insbesondere orthogonal zur Schwenkachse, ausgerichtet sein. Das erste und zweite Ballastiergewicht können also direkt benachbart zueinander angeordnet sein. Der erste und zweite Ballastierarm können auch jede beliebige Position zwischen der Offenstellung und Schliessstellung einnehmen, sodass der Schwerpunkt der Ballastiervorrichtung verstellbar ist. Der erste und zweite Ballastierarm können also in der Offenstellung einen Winkel von 180 Grad einschliessen und in der Schliessstellung einen Winkel von 0 Grad einschliessen, wobei der erste Ballastierarm mit seiner Schwenkbewegung einen Winkelbereich von 0 bis 90 Grad und der zweite Ballastierarm mit seiner Schwenkbewegung einen Winkelbereich von 90 bis 180 Grad überstreichen kann.

Im Weiteren kann die Ballastiervorrichtung in einem von der Dreipunktanhängevorrichtung aufgenommenen Zustand von einer in Bezug auf den Schwerpunkt der Ballastiervorrichtung fahrzeugnahen Position in eine fahrzeugferne Position und umgekehrt bewegbar sein. Die Bewegung der Ballastiervorrichtung kann mittels Absenken oder Anheben der Ballastiervorrichtung mit den Unterlenkern der Dreipunktanhängevorrichtung erfolgen. Dadurch kann der Schwerpunkt der Ballastiervorrichtung in Bezug auf das Fahrzeug, insbesondere in Bezug einen Abstand des Schwerpunkts der Ballastiervorrichtung vom Fahrzeug, verstellt und/oder eingestellt werden. Von Vorteil kann somit das Verstellen und/oder Einstellen einer Schwerpunktslage des Schwerpunkts der Ballastiervorrichtung mit dem Verstellen und/oder Einstellen einer Schwerpunktslage des Schwerpunkts der Ballastiervorrichtung in Bezug auf das Fahrzeug kombiniert werden. Ausserdem kann mittels des Anhebens und/oder Absenken der Unterlenker eine Rotationsbewegung der Ballastiervorrichtung um die Schwenkachse eingeleitet werden. Dadurch kann der Schwerpunkt der Ballastiervorrichtung in einem festen Abstand zur Schwenkachse verschoben werden. Ebenso kann das Aufnahmelager der Ballstiervorrichtung derart ausgebildet sein, dass daran ein Oberlenker, insbesondere ein längenverstellbarer Oberlenker, der Dreipunktanhängevorrichtung koppelbar ist. Dadurch kann bei angekoppelter Ballastiervorrichtung eine Rotationsbewegung der Ballastiervorrichtung um die Schwenkachse eingestellt werden, insbesondere mittels Längenverstellung des Oberlenkers eine gezielte Rotationsbewegung der Ballastiervorrichtung um die Schwenkachse eingeleitet werden.

Die erfindungsgemässe Ballastiervorrichtung weist somit die folgenden Vorteile auf. Alleine schon dadurch, dass der Schwerpunkt der Ballastiervorrichtung verstellbar und/oder einstellbar ist, kann vorteilhafterweise eine Ballastierung des Fahrzeugs, also eine auf das Fahrzeug wirkende Zusatzmasse, sehr genau eingestellt und/oder variiert werden. Somit kann die Ballastiervorrichtung vorteilhafterweise auf einfache Art und Weise und/oder schnell an die vorherrschenden Betriebs- und/oder Arbeitsbedingungen angepasst werden. Im Weiteren wird im aufgenommenen Zustand der Ballastiervorrichtung auch das Verstellen und/oder Einstellen der Schwerpunktslage der Ballastiervorrichtungs in Bezug auf das Fahrzeug ermöglicht. Somit kann das Verstellen und/oder Einstellen einer Schwerpunktslage des Schwerpunkts der Ballastiervorrichtung in Bezug auf die Ballastiervorrichtung selbst mit dem Verstellen und/oder Einstellen einer Schwerpunktslage des Schwerpunkts der Ballastiervorrichtung in Bezug auf das Fahrzeug kombiniert werden. Die Ballastiervorrichtung in Kombination mit dem aufgenommenen Zustand der Ballastiervorrichtung, ermöglicht es somit, dass vorteilhafterweise mehrere Schwerpunktslagen kombiniert werden können, wodurch die auf das Fahrzeug wirkende Zusatzmasse sehr genau eingestellt und/oder an die vorherrschenden Arbeits- und/oder Betriebsbedingungen angepasst werden kann.

In Ausgestaltung der Erfindung sind die erste und zweite Lagerachse parallel oder räumlich zusammenfallend zueinander angeordnet. Im Weiteren können die erste und zweite Lagerachse orthogonal zur Schwenkachse angeordnet sein. Sind die erste und zweite Lagerachse zueinander räumlich zusammenfallend angeordnet, dann können der erste und zweite Ballastierarm um eine gemeinsame Drehachse schwenkbar am Ballastierkörper gelagert. In diesem Fall der gemeinsamen Drehachse können der erste und zweite Ballastierarm nacheinander oder übereinander, also sequenziell, entlang der gemeinsamen Drehachse angeordnet. Vorteilhafterweise kann so der Ballastierkörper kleiner ausgelegt werden und die Ballastierarme können länger ausgestaltet werden.
Sind die erste und zweite Lagerachse parallel zueinander angeordnet, dann können der erste und zweite Ballastierarm um die erste und zweite Lagerachse, also zwei getrennten Lagerachsen, mit paralleler Ausrichtung schwenkbar am Ballastierkörper gelagert sein. Vorteilhafterweise kann so das Gewicht des ersten und zweiten Ballastiergewichts besser am Ballastierkörper verteilt werden.

In Ausgestaltung der Erfindung umfasst die Ballastiervorrichtung eine erste Lagereinrichtung zur Lagerung des ersten Ballastierarms am Ballastierkörper und/oder eine zweite Lagereinrichtung zur Lagerung des zweiten Ballastierarms am Ballastierkörper. Mittels der ersten Lagereinrichtung kann der erste Ballastierarm am ersten Ende des ersten Ballastierarms verstellbar, bevorzugt schwenkbar, am Ballastierkörper gelagert sein, insbesondere auch am Ballastierkörper angelenkt und/oder mit dem Ballastierkörper gekoppelt sein. Ebenso kann der zweite Ballastierarm mittels der zweiten Lagereinrichtung am ersten Ende des zweiten Ballastierarms verstellbar, bevorzugt schwenkbar, am Ballastierkörper gelagert sein, insbesondere auch am Ballastierkörper angelenkt und/oder mit dem Ballastierkörper gekoppelt sein. Die erste und zweite Lagereinrichtung können aber auch als eine gemeinsame Lagereinrichtung zur gemeinsamen Lagerung des ersten und zweiten Ballastierarms am Ballastierkörper ausgeführt sein, d.h. der erste und zweite Ballastierarm können an ihrem jeweiligen am ersten Ende mittels der gemeinsamen Lagereinrichtung verstellbar, bevorzugt schwenkbar, am Ballastierkörper gelagert sein, insbesondere auch am Ballastierkörper angelenkt und/oder mit dem Ballastierkörper gekoppelt sein. Die erste Lagereinrichtung kann ein erstes Befestigungselement und/oder ein erstes Halteelement umfassen und die zweite Lagereinrichtung kann ein zweites Befestigungselement und/oder ein zweites Halteelement umfassen. Die gemeinsame Lagereinrichtung kann ein gemeinsames Befestigungselement oder ein erstes und zweites Befestigungselement umfassen und ein gemeinsames Halteelement oder ein erstes und zweites Halteelement umfassen. Der erste und/oder der zweite Ballastierarm können an Ihrem jeweils ersten Ende je eine Durchgangsbohrung aufweisen. Das erste und/oder zweite oder gemeinsame Befestigungselement können beispielsweise ein Stift und/oder ein Bolzen und/oder eine Schraube mit Mutter sein. Das erste und/oder zweite Halteelement oder das gemeinsame Halteelement und der Ballastierkörper können einstückig ausgebildet oder als ein am Ballastierkörper befestigtes Bauteil ausgeführt sein.
Sind die erste und zweite Lagerachse räumlich parallel zueinander angeordnet, kann das erste Befestigungselement als erste Lagerachse und das zweite Befestigungselement als zweite Lagerachse ausgebildet sein. Dann kann der erste Ballastierarm mittels des ersten Befestigungselements verstellbar am Ballastierkörper gelagert werden, insbesondere mittels des ersten Befestigungselements am Ballastierkörper angelenkt werden, bevorzugt indem das erste Befestigungselement durch die Durchgangsbohrung des ersten Ballastierarms und das erste Halteelement oder das gemeinsame Halteelement geführt und das erste Befestigungselement am Ballastierkörper arretiert bzw. befestigt wird. Ebenso kann der zweite Ballastierarm mittels des zweiten Befestigungselements verstellbar am Ballastierkörper gelagert werden, bevorzugt indem das zweite Befestigungselement durch die Durchgangsbohrung des zweiten Ballastierarms und das zweite Halteelement oder das gemeinsame Halteelement geführt und das zweite Befestigungselement am Ballastierkörper arretiert bzw. befestigt wird. Sind die erste und zweite Lagerachse räumlich zusammenfallend zueinander angeordnet, kann das gemeinsame Befestigungselement als die gemeinsame Drehachse ausbildet sein. Es können dann aber auch der erste und zweite Ballastierarm mittels des gemeinsamen Befestigungselements verstellbar am Ballastierkörper gelagert werden bzw. mittels des gemeinsamen Befestigungselements am Ballastierkörper angelenkt werden, bevorzugt indem das gemeinsame Befestigungselement durch die Durchgangsbohrungen des ersten und zweiten Ballastierarms und das gemeinsame Halteelement geführt und das gemeinsame Befestigungselement am Ballastierkörper arretiert bzw. befestigt wird.

Das erste und/oder zweite Halteelement können aber auch als ein vom Ballastierkörper und/oder den Ballastierarmen unabhängiges Bauteil der Ballastiervorrichtung ausgebildet sein. Der erste Ballastierarm kann an oder im ersten Halteelement und der zweite Ballastierarm an oder im zweiten Halteelement angeordnet sein, bevorzugt können die Ballastierarme mit dem jeweiligen Haltelement lösbar verbunden oder an diesem befestigt sein. Das erste Halteelement kann mit dem an oder im ersten Halteelement angeordneten ersten Ballastierarm mittels des ersten Befestigungselements verstellbar, insbesondere schwenkbar, am Ballastierkörper gelagert und/oder an den Ballastierkörper gekoppelt werden. Ebenso kann das zweite Halteelement mit dem an oder im zweiten Halteelement angeordneten zweiten Ballastierarm mittels des zweiten Befestigungselements verstellbar, insbesondere schwenkbar, am Ballastierkörper gelagert und/oder an den Ballastierkörper gekoppelt werden. Im Speziellen kann das erste Befestigungselement durch die Durchgangsbohrung des ersten Ballastierarms und/oder das erste Halteelement geführt werden. Ebenso kann das zweite Befestigungselement durch die Durchgangsbohrung des zweiten Ballastierarms und/oder das zweite Halteelement geführt werden. Das erste und/oder zweite Befestigungselement können am Ballastierkörper arretiert oder lösbar verbunden oder befestigt werden. Von Vorteil wird mittels der beschriebenen Massnahme eine Verstellbarkeit des ersten und/oder zweiten Ballastierarms und somit des Schwerpunkts der Ballastiervorrichtung erreicht.

Unter wirkverbunden kann im Folgenden insbesondere die Übertragung von Kraft zwischen zwei Bauteilen der Ballastiervorrichtung verstanden werden, beispielsweise vom ersten zum zweiten Halteelement oder vom ersten zum zweiten Ballastierarm oder vom ersten zum zweiten Wirkelement und umgekehrt. Dadurch kann insbesondere eine Bewegung der beiden Bauteile synchronisiert werden. Als spezielle Massnahme können der erste und/oder zweite Ballastierarm und/oder das erste und/oder zweite Halteelement miteinander wirkverbunden sein. Im Speziellen können der erste und zweite Ballastierarm und/oder das erste und zweite Halteelement mittels eines Verbindungselements, beispielsweise ein Hebel, miteinander wirkverbunden sein. Das Verbindungselement kann insbesondere derart ausgebildet und angeordnet sein, dass dadurch vorteilhafterweise die Bewegung, insbesondere die Schwenkbewegung, des ersten und zweiten Halteelements und/oder des ersten und zweiten Ballastierarms synchronisiert wird.

In Ausgestaltung der Erfindung umfassen der erste Ballastierarm an seinem einen Ende, also dem ersten Ende, ein erstes Wirkelement und der zweite Ballastierarm an seinem einen Ende, also dem ersten Ende, ein zweites Wirkelement, wobei das erste und zweite Wirkelement miteinander wirkverbunden sind. Das erste und/oder zweite Wirkelement kann beispielsweise ein Zahnrad oder eine Riemenverbindung sein. Der erste Ballastierarm und das erste Wirkelement und/oder der zweite Ballastierarm und das zweite Wirkelement können einstückig, also als ein Bauteil, oder zweitstückig ausgebildet sein, insbesondere lösbar miteinander verbunden sein. Das erste und zweite Wirkelement können insbesondere derart wirkverbunden und/oder angeordnet sein, dass der erste und zweite Ballastierarm mittels einer Bewegung des ersten und/oder zweiten Wirkelements verstellbar, insbesondere gegeneinander verschwenkbar sind. Vorteilhafterweise kann dadurch die Bewegung, insbesondere die Schwenkbewegung, des ersten und zweiten Ballastierarms synchronisiert werden.

In Ausgestaltung der Erfindung umfasst die Ballastiervorrichtung einen ersten Aktuator, mit dem der erste Ballastierarm um die erste Lagerachse verstellbar, insbesondere verschwenkbar ist, und/oder die Ballastiervorrichtung umfasst einen zweiten Aktuator, mit dem der zweite Ballastierarm um die zweite Lagerachse verstellbar, insbesondere verschwenkbar ist. Der erste Aktuator kann mit dem ersten und/oder zweiten Ballastierarm und/oder dem ersten und/oder zweiten Halteelement und/oder dem ersten und/oder zweiten Wirkelement wirkverbunden und/oder an diese lösbar gekoppelt oder an diesen befestigt sein. Der erste und/oder zweite Ballastierarm und/oder das erste und/oder zweite Halteelement und/oder das erste und/oder zweite Wirkelement können mittels des ersten Aktuators betätigbar und/oder verstellbar sein, bevorzugt schwenkbar sein, besonders bevorzugt gegeneinander verschwenkbar oder bewegbar sein. Der erste Aktuator kann somit vorteilhafterweisen zusätzlich als Verbindungselement eingesetzt werden. Ausserdem kann eine Kraft, insbesondere eine Bewegung oder Schwenkbewegung, des ersten Aktuators aufgrund einer vorhandenen Wirkverbindung vom ersten Ballastierarm und/oder ersten Halteelement und/oder Verbindungselement und/oder ersten Wirkelement auf den zweiten Ballastierarm und/oder das zweite Halteelement und/oder das zweite Wirkelements übertragen werden. Der erste Aktuator und/oder zweite Aktuator können derart ausgestaltet und wie beschrieben angeordnet sein, dass diese den ersten und zweiten Ballastierarm von der Schliessstellung in die Offenstellung und umgekehrt bewegen können. Im Weiteren kann der zweite Aktuator mit dem zweite Ballastierarm und/oder dem zweite Halteelement und/oder dem zweite Wirkelement wirkverbunden und/oder an diese gekoppelt und/oder befestigt sein. Der zweite Ballastierarm und/oder das zweite Halteelement und/oder das zweite Wirkelement können mittels des zweiten Aktuators betätigbar und/oder verstellbar sein, insbesondere schwenkbar, d.h. der zweite Aktuator kann eine Kraft aufwenden, derart, dass der zweite Ballastierarm und/oder das erste Halteelement und/oder das erste Wirkelement betätigbar und/oder verstellbar sind. Es kann auch eine Kraft, insbesondere eine Bewegung oder Schwenkbewegung, des zweiten Aktuators und/oder des zweiten Ballastierarms und/oder des zweiten Halteelement und/oder des Verbindungselements und/oder des zweiten Wirkelements aufgrund der Wirkverbindung auf den ersten Ballastierarm und/oder das erste Halteelement und/oder das erste Wirkelement übertragen werden. Sind ein erster und zweite Aktuator vorgesehen, kann auch auf eine Kopplung, insbesondere Wirkverbindung zwischen den Ballastierarmen und/oder Haltelementen und/oder Wirkelementen verzichtet werden, insbesondere kann auf das Verbindungselement verzichtet werden. Der erste und/oder zweite Aktuator können bevorzugt als Hydraulikzylinder ausgebildet sein. Es ist jedoch auch denkbar eine andere, beispielsweise elektrische, mechanische oder pneumatische Betätigungsart eines Hubzylinders zu wählen. So können der erste und/oder zweite Aktuator als Elektromotor, beispielsweise Spindelmotor, ausgebildet sein. Auch eine entsprechende Anordnung mit einem Seilzug ist denkbar, um die Betätigung rein mechanisch zu gestalten. Vorzugsweise sind der erste und/oder zweite Aktuator derart mit dem ersten Ende des jeweiligen Ballastierarms und/oder dem jeweiligen Halteelement und/oder dem jeweiligen Wirkelement lösbar verbunden und/oder an diesem befestigt, dass durch Betätigen des ersten und/oder zweiten Aktuators der erste und/oder zweite Ballastierarm eine geführte Schwenkbewegung des jeweiligen Ballastiergewichts um die erste und/oder zweite Lagerachse ausgelöst werden kann. Dadurch wird gewährleistet, dass eine Bedienperson durch Fernsteuerung ein Variieren bzw. Verschieben bzw. Verstellen der Ballastiervorrichtung realisieren und auch bei sich ändernden Betriebsbedingungen schnell reagieren und die Ballastierung optimieren kann. Die Ballastiervorrichtung oder das landwirtschaftliche Fahrzeug können auch eine Steuereinheit umfassen. Die Steuereinheit kann derart ausgestaltet und eingerichtet sein, dass der erste und/oder zweite Ballastierarm oder der erste Ballastierarm mittels des ersten Aktuators und/oder der zweite Ballastierarm mittels des zweiten Aktuators verstellbar, insbesondere gegeneinander verschwenkbar sind, derart, dass der Schwerpunkt der Ballastiervorrichtung ermittelbar und/oder speicherbar und/oder ausgebbar und/oder einstellbar ist. Es kann auch ein Verfahren zum Verstellen und/oder Einstellen des Schwerpunkts der Ballastiervorrichtung mit der Steuereinheit durchführbar sein.

In Ausgestaltung der Erfindung umfasst die Ballastiervorrichtung einen oder mehrere Anschlagpuffer und/oder eine oder mehrere Arretiereinrichtungen. Am Ballastierkörper und/oder dem ersten und/oder zweiten Ballastierarm und/oder dem ersten und/oder zweiten Ballastiergewicht können einer oder mehrere Anschlagpuffer und/oder eines oder mehrere Befestigungselemente vorgesehen sein. Im Speziellen kann der Anschlagpuffer als Teil des Ballastierkörpers und/oder des ersten und/oder zweiten Ballastierarms und/oder des ersten und/oder zweiten Ballastiergewichts ausgebildet und/oder als separater Anschlagpuffer befestigt sein. Der Anschlagpuffer kann als Begrenzungsanschlag ausgebildet sein, sodass die Schwenkbewegung des ersten und/oder zweiten Ballastierarms zwischen der Offenstellung und Schliessstellung begrenzt ist. Der Anschlagpuffer kann aber auch als Dämpfer ausgebildet sein, sodass die Schwenkbewegung des ersten und/oder zweiten Ballastierarms gedämpft wird. Die Anschlagpuffer können aus Metall und/oder einem elastischen Stoff sein, beispielsweise Eisen und/oder Gummi. Der Anschlagpuffer ermöglicht es vorteilhafterweise die Schwenkbewegung der Ballastierarme zu beschränken und/oder kinetische Energie der Ballastierarme zu absorbieren. Mittels der Arretiereinrichtung können die Ballastierarme in der Offen- und/oder Schliessstellung oder anderen einstellbaren Positionen dazwischen arretiert werden. Die Arretiereinrichtungen ermöglichen es vorteilhafterweise, dass der erste und/oder zweite Ballastierarm keine Schwenkbewegung ausführen können. Die Arretiereinrichtung kann beispielsweise ein erstes und/oder zweites Arretierelement umfassen, beispielsweise ein Stift und/oder ein Bolzen und/oder eine Schraube. Hierbei können der erste und/oder zweite Ballastierarm genau in der Offenstellung oder der Schliessstellung arretiert werden, indem das erste und/oder zweite Arretierelement mit dem Ballastkörper und dem jeweiligen Ballastierarmen lösbar verbunden werden, sodass eine Schwenkbewegung der Ballastierarme blockiert wird. Die Arretiereinrichtung kann aber auch einen oder mehrere Haken oder Riegel umfassen, die den ersten und/oder zweiten Ballastierarm genau in der Offenstellung oder der Schliessstellung arretieren, indem beispielsweise der Haken oder Riegel am Ballastkörper befestigt ist und mit einem Gegenstück, beispielsweise eine Öse, am jeweiligen Ballastierarm in eine formschlüssige und wieder lösbare Verbindung gebracht wird, sodass eine Schwenkbewegung der Ballastierarme unterbunden wird. Die Haken oder Riegel können Federn umfassen, um sie in den Ballastierarmen zu halten. Die Arretiereinrichtung kann insbesondere als Bonnet-Verschluss oder Schnappverschluss ausgebildet sein. Ausserdem kann eine Arretiervorrichtung vorgesehen sein, mit welcher der Unter- und/oder der Oberlenker der Dreipunktanhängevorrichtung in den einstellbaren Stellungen arretierbar sind. Dadurch wird gewährleistet, dass die Ballastiervorrichtung sicher und vorzugsweise spielfrei in einer fahrzeugnahen oder auch fahrzeugfernen Position gehalten wird. Hierbei ist es möglich auch Positionen zwischen der fahrzeugnahen und der fahrzeugfernen Position arretierbar vorzusehen, so dass eine Ballastierung entsprechend feinabgestimmt durchgeführt werden kann. Vorzugsweise umfasst die Arretiereinrichtung, dass der erste und/oder zweite Ballastieram und/oder die Arretiervorrichtung, dass die verstellbaren Unter- und/oder der verstellbare Oberlenker hydraulisch oder pneumatisch bzw. mechanisch bzw. elektrisch in einer bestimmten Stellung arretierbar sind, also gehalten bzw. blockiert werden können, sodass der erste und/oder zweite Ballastieram und/oder die verstellbaren Unter- und/oder Oberlenker einer gehaltenen bzw. blockierten Stellung verweilen. Im Speziellen können der erste und/oder zweite Aktuator als Arretiereinrichtung ausgebildet sein, indem der erste und/oder zweite Aktuator hydraulisch oder pneumatisch oder mechanisch oder elektrisch in einer bestimmten Stellung arretierbar sind, also gehalten und/oder blockiert werden können, sodass diese in einer gehaltenen und/oder blockierten Stellung verweilen. Eine derartige Arretierung bzw. Blockierung kann an der Ballastiervorrichtung, die einen hydraulisch ausgebildeten ersten und/oder zweiten Aktuator umfasst, beispielsweise hydraulisch erfolgen. Ein elektrisch betätigbarer Spindel- oder Schrittmotor als erster und/oder zweiter Aktuator kann beispielsweise durch entsprechende elektronische Steuersignale in seiner Position verharren und die Ballastierarme elektrisch blockieren. Dadurch wird gewährleistet, dass die Ballastiervorrichtung sicher und vorzugsweise spielfrei in der Offen- oder Schliessstellung oder einer Position dazwischen gehalten wird, sodass eine Ballastierung entsprechend feinabgestimmt durchgeführt werden kann. Ebenso kann die Dreipunktanhängevorrichtung und/oder das Fahrzeug einen oder mehrere weitere Aktuatoren, insbesondere hydraulisch ausgebildete Aktuatoren umfassen, beispielsweise für den verstellbaren Unter- und/oder Oberlenker. Der oder die weiteren Aktuatoren können auch als ein elektrisch betätigbarer Spindel- oder Schrittmotor ausgebildet sein und beispielsweise durch entsprechende elektronische Steuersignale in seiner Position verharren und die Lenkeranordnung elektrisch blockieren.

In Ausgestaltung der Erfindung sind der erste und/oder zweite Ballastierarm als teleskopartige Ballastierarme, insbesondere als teleskopartige längenveränderliche Ballastierarme, ausgebildet. Hierzu können der erste und/oder zweite Ballastierarm zweistückig ausgebildet sein, also jeweils zwei lösbare Armelemente aufweisen. Die Armelemente können relativ zueinander verstellbar und aneinander geführt sein, insbesondere kann das eine Armelement im anderen Armelement geführt sein.
Die beiden Armelemente können manuell oder automatisch, beispielsweise mittels einer Vorschubeinrichtung verstellbar sein. Ausserdem können eine oder mehrere Verriegelungseinrichtungen zur Begrenzung der Relativbewegung der Armelemente zueinander vorgesehen sein. Beispielsweise können die Armelemente Löcher aufweisen, in denen beispielsweise ein Stift oder Bolzen die Bewegung durch die Löcher in beiden Armelemente die Relativbewegung der beiden Armelemente zueinander blockiert. Vorteilhafterweise kann mit dieser Massnahme die jeweilige Länge des ersten und/oder zweiten Ballastierarm verstellt und eingestellt werden. Darüber hinaus kann dadurch zusätzlich die Schwerpunktlage des Schwerpunkts der Ballastiervorrichtung verstellbar und/oder einstellbar sein.

In Ausgestaltung der Erfindung umfassen das erste und/oder das zweite Ballasttiergewicht eines oder mehrere Einzelgewichte (z.B. a 40, 50 oder 60 kg). Dabei kann das erste Ballasttiergewicht, insbesondere auch das Einzelgewicht, mit dem ersten Ballastierarm lösbar verbunden sein und/oder das zweite Ballasttiergewicht, insbesondere auch das Einzelgewicht, mit dem zweiten Ballastierarm lösbar verbunden sein. Vorteilhafterweise kann so die Ballastierung der Ballastiervorrichtung, insbesondere das erste und/oder zweite Ballastiergewicht, auf einfache Art und Weise verstellt, insbesondere erhöht oder gesenkt werden. Das erste und/oder zweite Ballastiergewicht können aber auch ein einteiliges Gewicht (z.B. 800-1000 kg, insbesondere 900 kg) sein. Ebenso kann der erste Ballastierarm mit dem ersten Ballasttiergewicht einstückig ausgebildet sein, insbesondere also als ein Bauteil, und/oder der zweite Ballastierarm kann mit dem zweiten Ballasttiergewicht einstückig ausgebildet sein.

Die Erfindung betrifft weiter ein landwirtschaftliches Fahrzeug, insbesondere einen Schlepper oder Traktor oder eine Zugmaschine, mit einer Ballastiervorrichtung, insbesondere einer Ballastiervorrichtung nach einem der Ansprüche 1 bis 10. Das erfindungsgemässe landwirtschaftliche Fahrzeug weist die oben beschriebenen Vorteile der erfindungsgemässen Ballastiervorrichtung auf.

In Ausgestaltung der Erfindung umfasst das landwirtschaftliche Fahrzeug eine Dreipunktanhängevorrichtung, wobei die Ballastiervorrichtung mit einem Ballastierkörper und einem ersten und zweiten Ballastierarm von der Dreipunktanhängevorrichtung aufnehmbar oder aufgenommen ist. Das erleichtert sowohl das Abstellen bzw. Abmontieren als auch das Aufsetzen bzw. Anmontieren der Ballastiervorrichtung. Im Weiteren ist der erste Ballastierarm mit dem einen Ende um eine erste Lagerachse schwenkbar am Ballastierkörper gelagert und an dessen anderen Ende ist ein erstes Ballastiergewicht angeordnet. Ebenso ist der zweite Ballastierarm mit dem einen Ende um eine zweite Lagerachse schwenkbar am Ballastierkörper gelagert und an dessen anderen Ende ist ein zweites Ballastiergewicht angeordnet. Das landwirtschaftliche Fahrzeug kann im Weiteren einen Fahrzeugrumpf oder Fahrzeugrahmen aufweisen, wobei die Dreipunktanhängevorrichtung am Fahrzeugrumpf oder Fahrzeugrahme, insbesondere am vorderen Teil, befestigt sein kann. Die Ballastiervorrichtung, insbesondere ein Ballastierkörper der Ballastiervorrichtung, weist eine Aufnahmeeinrichtung zur Aufnahme der Ballastiervorrichtung mittels der Dreipunktanhängevorrichtung auf. Die Aufnahmeeinrichtung kann von einem oder mehreren Unterlenkern oder Oberlenkern der Dreipunktanhängevorrichtung aufgenommen sein. Das erste und zweite Ballastiergewicht können mittels des ersten und zweiten Ballastierarms derart verstellt, insbesondere gegeneinander verschwenkt werden, dass der Schwerpunkt der Ballastiervorrichtung verstellbar und/oder einstellbar ist, insbesondere eine Lage des Schwerpunkts der Ballastiervorrichtung in Bezug auf den Ballastierkörper verstellt und/oder eingestellt werden kann. Gleichzeitig kann der Schwerpunkts der Ballastiervorrichtung in Bezug auf das Fahrzeug verstellt und/oder eingestellt werden, indem die Ballastiervorrichtung mittels der Dreipunktanhängevorrichtung von einer fahrzeugnahen Position in eine fahrzeugferne Position und umgekehrt verstellbar und/oder einstellbar ist. Von Vorteil kann somit das Verstellen und/oder Einstellen einer Schwerpunktslage des Schwerpunkts der Ballastiervorrichtung, insbesondere in Bezug auf die Ballastiervorrichtung selbst, mit dem Verstellen und/oder Einstellen einer Schwerpunktslage des Schwerpunkts der Ballastiervorrichtung in Bezug auf das Fahrzeug kombiniert werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Seitenansicht eines Ausführungsbeispiels eines erfindungsgemässen landwirtschaftlichen Fahrzeugs mit einer an eine Dreipunktanhängevorrichtung gekoppelten erfindungsgemässen Ballastiervorrichtung, und
- Fig. 2: eine schematische Draufsicht eines ersten erfindungsgemässen Ausführungsbeispiel einer Ballastiervorrichtung in einer Offenstellung, und
- Fig. 3: eine schematische Draufsicht des ersten erfindungsgemäßen Ausführungsbeispiels der Ballastiervorrichtung gemäss Figur 2 in einer Schliessstellung, und
- Fig. 4: eine schematische Darstellung eines Ballastierkörpers des ersten erfindungsgemäßen Ausführungsbeispiels der Ballastiervorrichtung gemäss den Figuren 2 und 3, und
- Fig. 5: eine schematische Darstellung des Ballastierkörpers des ersten erfindungsgemäßen Ausführungsbeispiels der Ballastiervorrichtung gemäss den Figuren 2 und 3, und
- Fig. 6: eine schematische Draufsicht eines zweiten erfindungsgemässen Ausführungsbeispiel einer Ballastiervorrichtung in einer Offenstellung
- Fig. 7: eine schematische Darstellungen eines Ballastierkörpers des zweiten erfindungsgemäßen Ausführungsbeispiels der Ballastiervorrichtung gemäss Figur 6.
- Fig. 8: eine schematische perspektivische Darstellung eines dritten erfindungsgemässen Ausführungsbeispiels der Ballastiervorrichtung in einer Offenstellung, und
- Fig. 9: eine schematische perspektivische Darstellung eines vierten erfindungsgemässen Ausführungsbeispiels der Ballastiervorrichtung in einer Offenstellung, und
- Fig. 10: eine schematische Darstellung eines fünften erfindungsgemässen Ausführungsbeispiels der Ballastiervorrichtung, und
- Fig. 11: eine schematische Darstellung eines sechsten erfindungsgemässen Ausführungsbeispiels der Ballastiervorrichtung, und
- Fig. 12: eine schematische Draufsicht eines siebten erfindungsgemässen Ausführungsbeispiels der Ballastiervorrichtung in einer Offenstellung.
- Fig. 13: eine schematische Darstellung einer erfindungsgemässen Ballastiervorrichtung in einem von einer Dreipunktanhängevorrichtung aufgenommen Zustand in einer fahrzeugnahen Position, und
- Fig. 14: eine schematische Darstellung einer erfindungsgemässen Ballastiervorrichtung in einem von einer Dreipunktanhängevorrichtung aufgenommen Zustand in einer fahrzeugfernen Position.

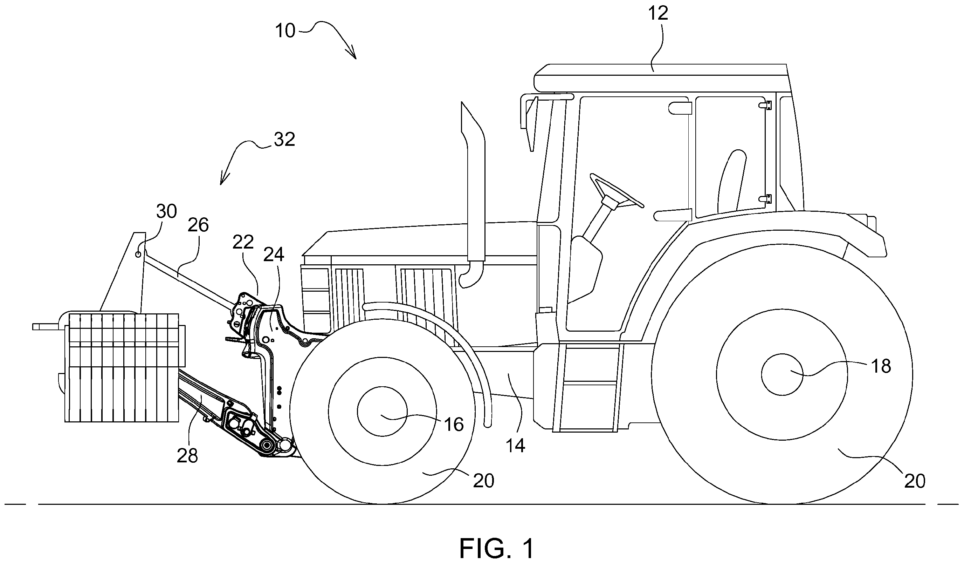

Figur 1 zeigt eine schematische Seitenansicht eines Ausführungsbeispiels eines erfindungsgemässen landwirtschaftlichen Fahrzeugs 10 in Form eines Traktors 12 mit einer an eine Dreipunktanhängevorrichtung 22 gekoppelten erfindungsgemässen Ballastiervorrichtung 32. Der Traktor 12 weist einen Fahrzeugrahmen 14 auf, der von an einer Vorderachse 16 und einer Hinterachse 18 aufgehängten Rädern 20 getragen wird. An den Fahrzeugrahmen 14 ist an der Vorderseite des Fahrzeugs 10 eine Dreipunktanhängevorrichtung 22 angeordnet, welche lösbar über einen Befestigungsrahmen 24 an den Fahrzeugrahmen 14 befestigt, insbesondere mit diesem verschraubt ist, und sich über den Fahrzeugrahmen 14 hinaus nach vorn erstreckt. Die Front-Dreipunktanhängevorrichtung 22 weist einen mittig zum Fahrzeug 10 und im oberen Bereich der Dreipunktanhängevorrichtung 22 angeordneten Oberlenker 26 sowie zwei seitlich zum Oberlenker 26 und im unteren Bereich der Dreipunktanhängevorrichtung 22 angeordnete Unterlenker 28 auf, die jeweils schwenkbar an dem Befestigungsrahmen 24 gelagert sind. Zwischen den Unterlenkern 28 und dem Befestigungsrahmen 22 erstrecken sich jeweils Stellmittel (nicht dargestellt), welche die Unterlenker 28 in einer gewünschten Schwenkposition zum Befestigungsrahmen 22 halten. Die Stellmittel können als Hydraulikzylinder ausgebildet sein, so dass die Unterlenker 28 hydraulisch höhenverstellbar bzw. winkelverstellbar bzw. verschwenkbar sind. Die Ober- und Unterlenker 26, 28 sind jeweils mit Anlenkpunkten 30 und/oder Fanghaken versehen, an die eine für die Dreipunktanhängevorrichtung 22 ausgelegte Arbeitsvorrichtung in Form einer erfindungsgemäßen Ballastiervorrichtung 32 gekoppelt bzw. angehängt ist.

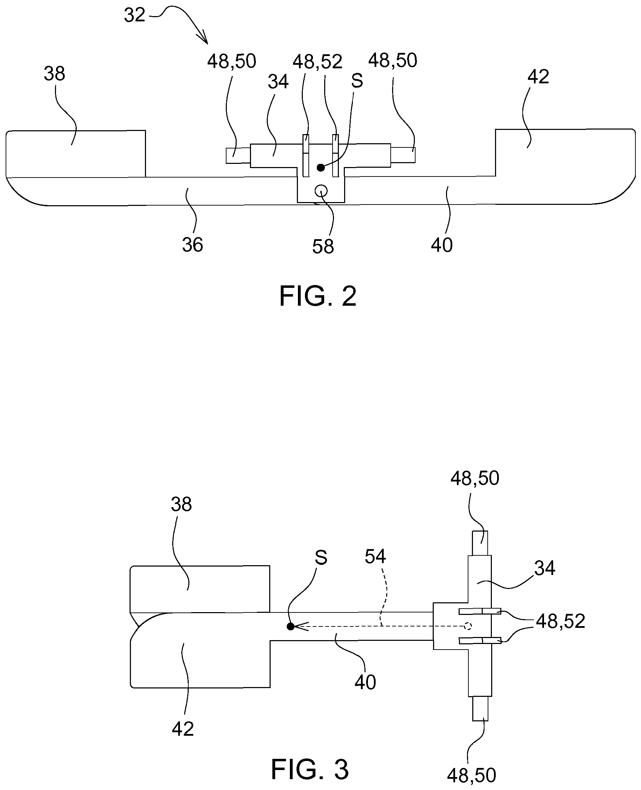

Anhand der Figuren 2 bis 14 werden im Folgenden verschiedene Ausführungsbeispiele einer erfindungsgemäßen Ballastiervorrichtung 32 beschrieben. Die im Folgenden beschriebenen Ballastiervorrichtungen 32 weisen jeweils einen Ballastierkörper 34 sowie einen ersten Ballastierarm 36 und einen zweiten Ballastierarm 40 auf. Der erste Ballastierarm 36 ist hierbei mit dem einen Ende um eine erste Lagerachse 44 schwenkbar am Ballastierkörper 34 gelagert ist, insbesondere auch am Ballastierkörper 34 angelenkt, und an dessen anderen Ende ist ein erstes Ballastiergewicht 38 angeordnet ist. Ebenso ist der zweite Ballastierarm 40 mit dem einen Ende um eine zweite Lagerachse 46 schwenkbar am Ballastierkörper 34 gelagert, insbesondere auch am Ballastierkörper 34 angelenkt, und an dessen anderen Ende ist ein zweites Ballastiergewicht 42 angeordnet. Die Ballastiervorrichtung 32, insbesondere der Ballastierkörper 34, weist weiter eine Aufnahmeeinrichtung 48 zur Aufnahme der Ballastiervorrichtung 32 mittels einer Dreipunktanhängevorrichtung 22 des landwirtschaftlichen Fahrzeugs 10 auf.

Wesentlich für die erfindungsgemässe Ballastiervorrichtung 32 ist hierbei, dass das erste Ballastiergewicht 38 mittels des ersten Ballastierarms 36 und das zweite Ballastiergewicht 42 mittels des zweiten Ballastierarms 40 verstellbar, insbesondere gegeneinander verschwenkbar ist, und zwar derart, dass der Schwerpunkts S der Ballastiervorrichtung 32, im Speziellen der Schwerpunkts S der Ballastiervorrichtung 32 in Bezug auf den Ballastierkörper 34, also eine Lage des Schwerpunkts S, verstellbar und/oder einstellbar ist. Der erste und zweite Ballstierarm 36, 40 können hierbei manuell, beispielsweise mittels Menschenkraft, oder automatisiert, beispielsweise mittels eines ersten und/oder zweiten Aktuators verstellbar und/oder einstellbar sein.

Mit anderen Worten, der erste und zweite Ballastierarm 36, 40 sind von einer Offenstellung, in welcher der Schwerpunkt S der Ballastiervorrichtung 32 keinen oder einen minimalen Abstand zum Ballastierkörper 34 aufweist, in eine Schliessstellung, in der der Schwerpunkt S der Ballastiervorrichtung 32 einen maximalen Abstand zum Ballastierkörper 34 aufweist, gegeneinander verstellbar bzw. verschwenkbar und umgekehrt. Ebenso können der erste und zweite Ballastierarm 36, 40 zwischen der Offenstellung und Schliessstellung jede beliebige Position einnehmen, sodass der Schwerpunkt S beliebig einstellbar ist.

Die erfindungsgemäße Ballastiervorrichtung 32 ermöglicht es somit, durch das Verstellen, insbesondere mittels des gegeneinander Verschwenkens des ersten und zweiten Ballastierarms 36, 40, eine Verlagerung des ersten und zweiten Ballastiergewichts 38 ,42 zu erreichen, sodass vorteilhafterweise der Schwerpunkt S der Ballastiervorrichtung 32, insbesondere die Schwerpunktslage, mittels des ersten und zweiten Ballastierarms 36, 40 verstellbar und/oder einstellbar ist. Dadurch, dass der Schwerpunkt S der Ballastiervorrichtung 32 selbst verstellbar und/oder einstellbar ist, kann beispielsweise in einem aufgenommenen Zustand der Ballastiervorrichtung 32, die auf die Räder (Vorderräder) des Fahrzeugs 10 wirkende Zusatzmasse eingestellt werden und optimal den vorherrschenden Betriebs- und/oder Arbeitsbedingungen angepasst werden.

Die Aufnahmeeinrichtung 48 umfasst einen oder mehrere sich seitlich erstreckende Aufnahmebolzen 50, hier zwei Aufnahmebolzen, die als seitlich (seitlich im Sinne von quer zu einer Fahrzeuglängsachse) am Ballastierkörper 34 angeordnete Aufnahmebolzen 50 ausgebildet sind. Die Ballastiervorrichtung 32 ist an den Aufnahmebolzen 50 von den Unterlenkern 28, insbesondere den zwei Unterlenkern 28, der Dreipunktanhängevorrichtung 22 aufnehmbar und/oder ist schwenkbar an die Dreipunktanhängevorrichtung 22 gekoppelt. Die Aufnahmeeinrichtung 48 weist ausserdem ein Aufnahmelager 52 auf, das von einem Oberlenker 26 der Dreipunktanhängevorrichtung 22 aufnehmbar ist und/oder schwenkbar an die Dreipunktanhängevorrichtung 22 gekoppelt ist.

Die in den Figuren 1 bis 14 gezeigte Ballastiervorrichtungen 32 sind alle zur Aufnahme der Ballastiervorrichtung 32 mittels einer Dreipunktanhängevorrichtung 22 geeignet oder von dieser aufgenommen, sodass im Folgenden lediglich auf die Unterschiede zwischen den Ballastiervorrichtungen eingegangen wird. Die Aufnahmeeinrichtung 48 ist koaxial zu einer gemeinsamen Schwenkachse 56 ausgerichtet, insbesondere sind die Aufnahmebolzen 50 koaxial zur gemeinsamen Schwenkachse 56 ausgerichtet. Die Ballastiervorrichtung ist ausserdem in einem von der Dreipunktanhängevorrichtung 22 aufgenommenen Zustand von einer in Bezug auf den Schwerpunkt S der Ballastiervorrichtung 32 fahrzeugnahen Position in eine fahrzeugferne Position und zurück verstellbar und/oder einstellbar, bevorzugt bewegbar. Ein Verstellen und/oder Einstellen der Ballastiervorrichtung 32 ist dabei mittels einer Bewegung der Dreipunktanhängevorrichtung 22, insbesondere mittels Absenken oder Anheben der Unterlenker 28 erreichbar. Ausserdem kann durch das Anheben und/oder Absenken der Unterlenker 28 eine Rotationsbewegung der Ballastiervorrichtung 32 um die Schwenkachse 56 eingeleitet werden. Dadurch verschiebt sich der Schwerpunkt S der Ballastiervorrichtung 32 in einem festen Radius zur Schwenkachse 56, sodass es zu einer zusätzlichen Verlagerung des Schwerpunkts S der Ballastiervorrichtung 32 kommt.

Die Figuren 2 und 3 zeigen schematische Draufsichten eines ersten erfindungsgemässen Ausführungsbeispiels einer Ballastiervorrichtung 32 in einer Offenstellung (Figur 2) und in einer Schliessstellung (Figur 3). Die in den Figuren 2 und 3 gezeigte Ballastiervorrichtung 32 entspricht im Wesentlichen der in Figur 1 gezeigten Ballastiervorrichtung 32, sodass im Folgenden lediglich auf die Unterschiede eingegangen wird. In der Offenstellung in Figur 2 ist schematisch gezeigt, dass der Schwerpunkt S keinen oder einen minimalen Abstand zum Ballastierkörper 34 aufweist. Werden der erste und zweite Ballastierarm 36, 40 in die Schliessstellung in Figur 3 verstellt, insbesondere gegeneinander verschwenkt, verschiebt sich die der Schwerpunkt S der Ballastiervorrichtung 32 hin zu einem maximalen Abstand 54 vom Ballastierkörper 34. Darüber hinaus sind die erste und zweite Lagerachse 44, 46 zueinander räumlich zusammenfallend angeordnet, insbesondere als eine gemeinsame Drehachse 58 ausgebildet, sodass der erste und zweite Ballastierarm 36, 40 schwenkbar am Ballastierkörper 34 um die gemeinsamen Drehachse 58 gelagert bzw. angelenkt sind. Im Falle der gemeinsamen Drehachse 58 (wie in den Figuren 2 bis 5 gezeigt) sind der erste und zweite Ballastierarm 36, 40 sequenziell, also nacheinander oder übereinander, entlang der gemeinsamen Drehachse 58 angeordnet. Der erste Ballastierarm 36 und das erste Ballastiergewicht 38 sowie der zweite Ballastierarm 40 und das zweite Ballastiergewicht 42 sind einstückig ausgebildet.

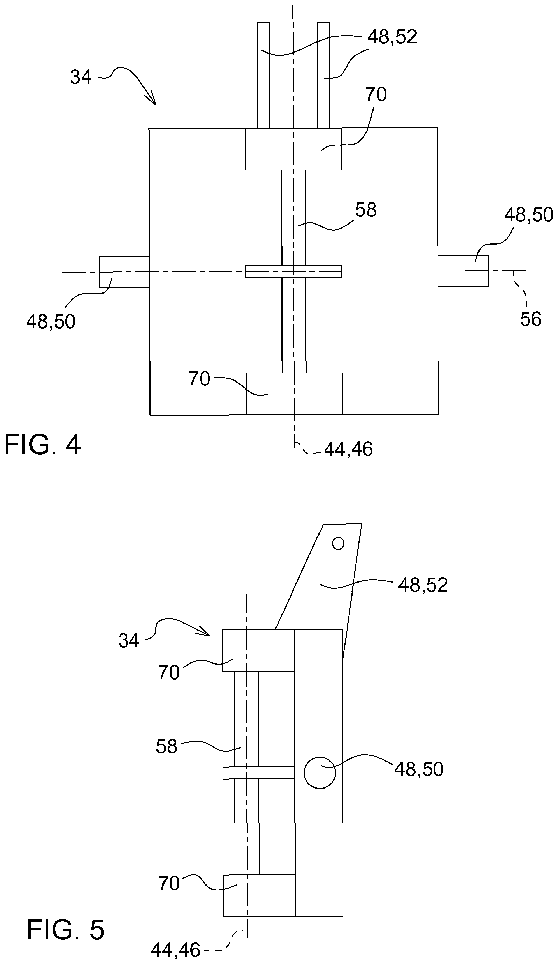

Die Figuren 4 und 5 zeigen schematische Darstellungen des Ballastierkörpers 34 des ersten erfindungsgemäßen Ausführungsbeispiels der Ballastiervorrichtung 32 aus den Figuren 2 und 3, sodass im Folgenden lediglich auf die Unterschiede eingegangen wird. Der in den Figuren 4 und 5 gezeigte Ballastierkörpers 34 ist der gleiche Ballastierkörper 34. In den Figuren 4 und 5 ist zu sehen, dass eine gemeinsame Lagereinrichtung zur Lagerung des ersten und zweiten Ballastierarms 36, 40 am Ballastierkörper 34 vorgesehen ist. Die gemeinsame Lagereinrichtung umfasst ein gemeinsames Befestigungselement 58, das auch als gemeinsame Drehachse 58 ausgebildet ist, und ein gemeinsames Halteelement 70, das als Teil des Ballastierkörpers 34 ausgebildet ist. Das erste und/oder zweite oder gemeinsame Befestigungselement 58 können beispielsweise ein Stift und/oder ein Bolzen und/oder eine Schraube mit Mutter sein. Das gemeinsamen Halteelemente 70 und der Ballastierkörper 34 sind einstückig ausgeführt, d.h. als ein gemeinsames Bauteil. Nicht gezeigt ist, dass der erste und zweite Ballastierarm 36, 40 an Ihrem jeweils ersten Ende, also dem am Ballastierkörper 34 angelenkten Ende, je eine Durchgangsbohrung aufweisen. Der erste und zweite Ballastierarm 36, 40 sind also am Ballastierkörper 34 mittels dem gemeinsamen Befestigungselement 58 angelenkt, wobei das gemeinsame Befestigungselement 58 durch die beiden Haltelemente 70 geführt und am Ballastierkörper 34 arretiert oder befestigt ist. Die Aufnahmeeinrichtung 48 mit den zwei Aufnahmebolzen 50 und dem Aufnahmelager 52 sind als ein Teil des Ballastierkörpers 34 ausgebildet sein, d.h. der Ballastierkörper 34 und die Aufnahmeeinrichtung 48 sind einstückig ausgebildet.

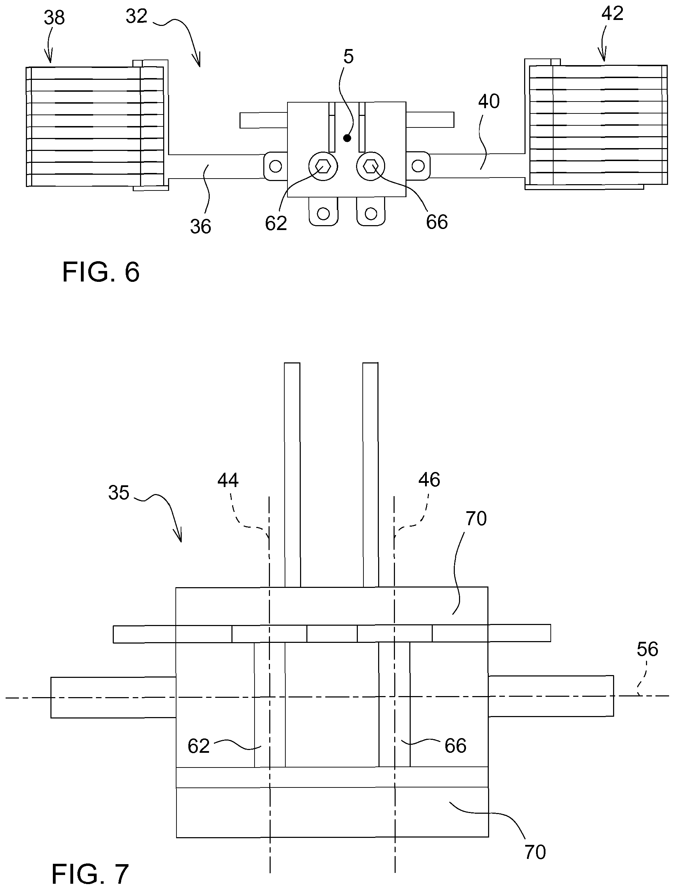

Figur 6 zeigt eine schematischen Draufsicht eines zweiten erfindungsgemässen Ausführungsbeispiel der Ballastiervorrichtung 32 in einer Offenstellung und Figur 7 zeigt eine schematische Darstellungen eines Ballastierkörpers 34 des zweiten erfindungsgemäßen Ausführungsbeispiels der Ballastiervorrichtung 32.
Die in Figur 6 gezeigte Ballastiervorrichtung 32 und der in Figur 7 gezeigte Ballastierkörper entsprechen im Wesentlichen den in den Figuren 1 bis 5 gezeigten Ballastiervorrichtungen 32 oder Ballastierkörpern 34, sodass im Folgenden lediglich auf die Unterschiede eingegangen wird. Ein wesentlicher Unterschied ist, dass die erste und zweite Lagerachse 44, 46 parallel zueinander angeordnet sind. Ausserdem sind die erste und zweite Lagerachse 44, 46 orthogonal zur Schwenkachse 56 angeordnet. Die Ballastiervorrichtung 32 gemäss dem zweiten Ausführungsbeispiel umfasst eine gemeinsame Lagereinrichtung zur Lagerung des ersten Ballastierarms und zweiten Ballastierarms. Mittels der gemeinsamen Lagereinrichtung, die ein erstes und zweites Befestigungselement 62, 66 und ein gemeinsames Halteelement 70 umfasst, ist der erste Ballastierarm 36 am ersten Ende des ersten Ballastierarms 36 schwenkbar am Ballastierkörper 34 und der zweite Ballastierarm 40 am ersten Ende des zweiten Ballastierarms 40 schwenkbar am Ballastierkörper 34 gelagert und angelenkt. Der erste und zweite Ballastierarm 36, 40 sind ausserdem zueinander gegeneinander verschwenkbar. Das erste und zweite Befestigungselement 62, 66, beispielsweise ein Stift und/oder Bolzen und/oder eine Schraube mit Mutter, sind gleichzeitig als erste und zweite Lagerachse 44, 46 ausgestaltet. Die erste und zweite Lagerachse 44, 46 und somit das erste und zweite Befestigungselement 62, 66 sind räumlich parallel zueinander angeordnet. Das gemeinsame Halteelement 70 ist als Teil des Ballastierkörpers 34 ausgeführt, d.h. die beiden Bauteile sind einstückig als ein gemeinsames Bauteil ausgeführt. Nicht zu sehen ist, dass der erste und zweite Ballastierarm 36, 40 an Ihrem jeweils ersten Ende, also dem am Ballastierkörper 34 angelenkten Ende, je eine Durchgangsbohrung aufweisen. Der erste und zweite Ballastierarm 36, 40 sind also am Ballastierkörper 34 mittels dem ersten und zweiten Befestigungselement 62, 66 angelenkt, wobei das erste und zweite Befestigungselement 62, 66 durch die Durchgangbohrungen und das gemeinsame Haltelemente 70 geführt und am Ballastierkörper 34 arretiert bzw. befestigt sind.

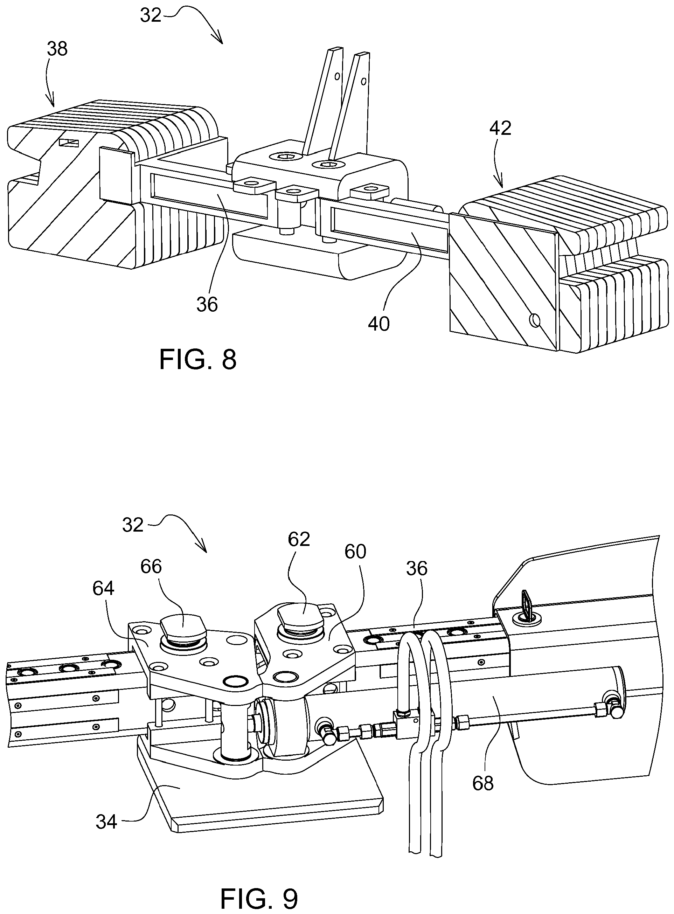

Figur 8 zeigt eine schematische perspektivische Darstellung eines dritten erfindungsgemässen Ausführungsbeispiels der Ballastiervorrichtung 32 in einer Offenstellung, die im Wesentlichen den in den Figuren 1 bis 7 gezeigten Ballastiervorrichtungen 32 entspricht, wobei im Folgenden lediglich auf die Unterschiede eingegangen wird. Wesentlich ist, dass das erste und zweite Ballasttiergewicht 38, 42 mehrere Einzelgewichte umfasst, die mit dem ersten und zweiten Ballastierarm 36, 40 lösbar verbunden und/oder an diesen befestigt bzw. arretiert sind. Die Einzelgewichte können einfach in den jeweiligen Ballastierarm eingehängt werden. Dadurch kann vorteilhafterweise eine höhere Flexibilität bzgl. der Ballastierung erreicht werden.

Figur 9 zeigt eine schematische perspektivische Darstellung eines vierten erfindungsgemässen Ausführungsbeispiels der Ballastiervorrichtung 32 in einer Offenstellung, die im Wesentlichen den in den Figuren 1 bis 8 gezeigten Ballastiervorrichtungen 32 entspricht, wobei im Folgenden lediglich auf die Unterschiede eingegangen wird. Der erste Ballastierarm 36 ist am, insbesondere im, ersten Halteelement 60 und der zweite Ballastierarm 40 am, insbesondere im, zweiten Halteelement 64 angeordnet, insbesondere lösbar mit dem jeweiligen Haltelement verbunden. Der erste Ballastierarm 36 und das erste Halteelement 60 sind mittels des ersten Befestigungselements 62, das auch als erste Lagerachse 44 ausgebildet ist, und der zweite Ballastierarm 40 und das zweite Halteelement 64 sind mittels des zweiten Befestigungselements 66, das auch als zweite Lagerachse 46 ausgebildet ist, schwenkbar, insbesondere gegeneinander verschwenkbar, am Ballastierkörper 34 gelagert und/oder angelenkt. Die Ballastiervorrichtung 32 umfasst ausserdem einen ersten Aktuator 68, der am ersten Halteelement 60 angeordnet, bevorzugt an diesem befestigt oder mit diesem lösbar verbunden ist, im Speziellen drehbar an diesem befestigt oder mit diesem lösbar und drehbar verbunden ist. Der erste Aktuator 68 ist als Hubzylinder mit Kolben und/oder Kolbenstange ausgebildet. Der erste Aktuator 68 bzw. Hubzylinder ist mit seinem Zylinder am ersten Haltelement drehbar befestigt ist und dessen Kolbenstange am zweiten Halteelement 64 drehbar befestigt ist, wodurch das erste und zweite Halteelement 60, 64 mittels des Aktors wirkverbunden sind. Mittels eine Betätigung des ersten Aktuators 68 ist das erste Halteelement 60 und somit auch der erste Ballastierarm 36 schwenkbar. Ausserdem wird bei Betätigung des ersten Aktuators 68 aufgrund der Wirkverbindung auch eine Kraft auf das zweite Halteelement 64 übertragen und somit auch der zweite Ballastierarm 40 geschwenkt. Der erste und zweite Ballastierarm 36, 40 sind also gegeneinander verschwenkbar, wobei die Bewegung des ersten und zweiten Halteelements 60, 64 und somit des ersten und zweiten Ballastierarms 36, 40 synchron verläuft. Der erste Aktuator 68 ist hierzu derart am ersten und zweiten Halteelement 60, 64 angeordnet, dass die Ballastiervorrichtung 32 bei vollständig aus dem Zylinder ausgefahrenem Kolben und/oder Kolbenstange in Schliessstellung und bei vollständig eingefahrenem Kolben und/oder Kolbenstange in Offenstellung ist.

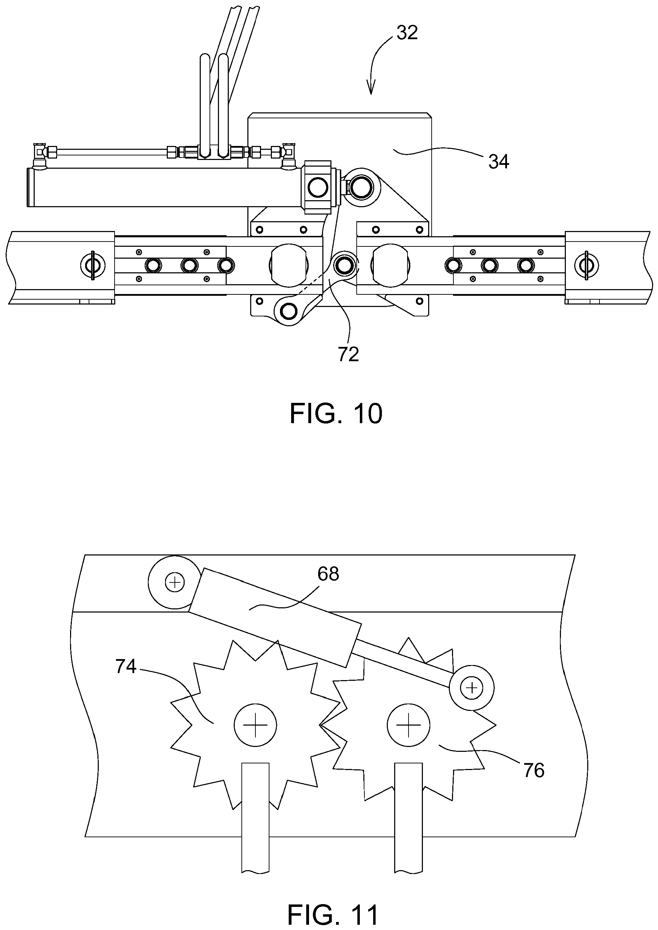

Figur 10 zeigt eine schematische Darstellung eines fünften erfindungsgemässen Ausführungsbeispiels der Ballastiervorrichtung 32 in einer Offenstellung. Die Ballastiervorrichtung 32 in Figur 10 entspricht im Wesentlichen den in den Figuren 1 bis 9 gezeigten Ballastiervorrichtungen 32, wobei im Folgenden lediglich auf die Unterschiede eingegangen wird. Figur 10 zeigt das erste und zweite Halteelement 60, 64 die mittels eines Verbindungselements 72, hier ein Hebel, wirkverbunden sind, sodass eine Bewegung des ersten und zweiten Halteelements 60, 64 und somit des ersten und zweiten Ballastierarms 36, 40 synchron verläuft.

Figur 11 zeigt eine schematische Darstellung eines sechsten erfindungsgemässen Ausführungsbeispiels der Ballastiervorrichtung 32 in einer Offenstellung. Die Ballastiervorrichtung 32 in Figur 11 entspricht im Wesentlichen den in den Figuren 1 bis 10 gezeigten Ballastiervorrichtungen 32, weshalb im Folgenden lediglich auf die Unterschiede eingegangen wird. Figur 11 zeigt einen ersten Ballastierarm 36, der am angelenkten Ende, ein erstes Wirkelement 74, das als Zahnrad ausgebildet ist, umfasst und einen zweiten Ballastierarm 40, der am angelenkten Ende ein zweites Wirkelement 76, das als Zahnrad ausgebildet ist, umfasst. Das erste und zweite Wirkelement 74, 76 sind wirkverbunden, indem diese ineinander greifen. Das zweite Wirkelement 76 kann ausserdem mit einem zweiten Aktuator 78 derart verbunden, dass wenn der zweite Aktuator betätigt wird, der erste und zweite Ballastierarm 36, 40 aufgrund der einer gegenläufigen Drehung des ersten und zweiten Wirkelements 74, 76 , gegeneinander verschwenkt werden und aufgrund der Wirkverbindung eine Bewegung des ersten und zweiten Wirkelements 74, 76 eine Bewegung, insbesondere Schwenkbewegung, des ersten und zweiten Ballastierarms 36, 40 bewirkt, wobei die Bewegung synchron verläuft. Der erste Ballastierarm 36 und das erste Wirkelement 74 sind einstückig, also als ein Bauteil ausgebildet. Ebenso der zweite Ballastierarm 40 und das zweite Wirkelement 76.

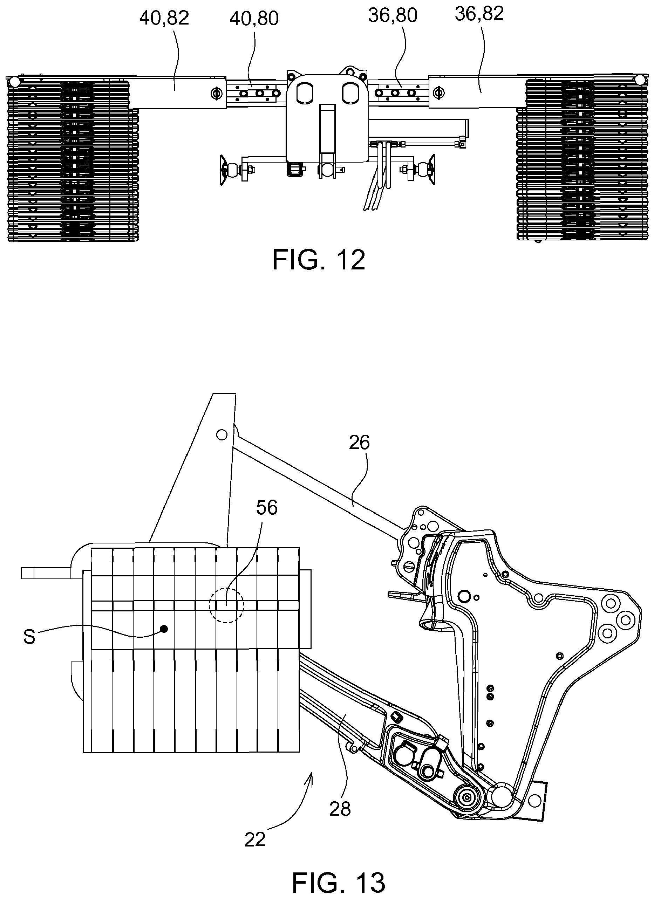

Figur 12 zeigt eine schematische Draufsicht eines siebten erfindungsgemässen Ausführungsbeispiels der Ballastiervorrichtung 32 in einer Offenstellung. Die Ballastiervorrichtung 32 entspricht im Wesentlichen den in den Figuren 1 bis 11 gezeigten Ballastiervorrichtungen 32, sodass im Folgenden lediglich auf die Unterschiede eingegangen wird. Der erste und zweite Ballastierarm 36, 40 sind als teleskopartige längenveränderliche Ballastierarme ausgebildet. Der erste und zweite Ballastierarm 36, 40 sind jeweils zweistückig ausgebildet, umfassen also jeweils zwei lösbare Armelemente 80, 82. Die Armelemente 80, 82 sind ineinander geführt, das bedeutet, dass ein Armelement 80 im anderen Armelement 82 angeordnet und geführt ist, sodass die Armelemente 80, 82 relativ zueinander verstellbar sind. Eine Relativbewegung der beiden Armelemente 80, 82 zueinander wird blockiert, indem beispielsweise ein Stift oder ein Bolzen durch Bohrungen oder Löcher in den beiden Armelemente gesteckt werden, sodass die Armelemente 80, 82 arretiert sind.

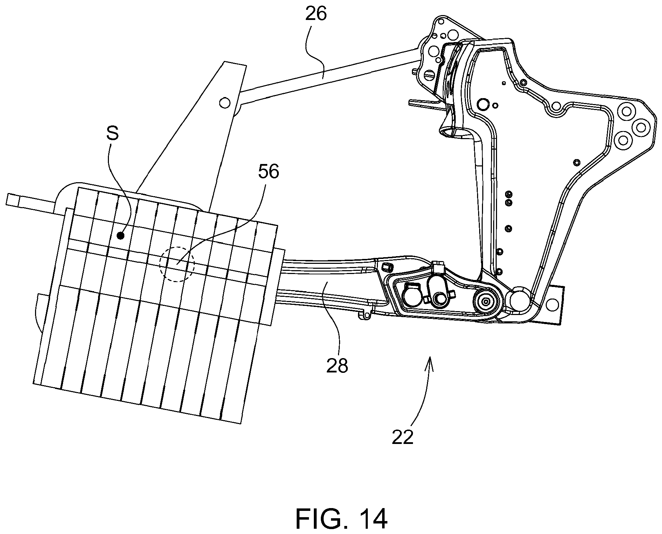

Die Figuren 13 und 14 zeigen eine schematische Darstellung einer erfindungsgemässen Ballastiervorrichtung 32 in einem von einer Dreipunktanhängevorrichtung 22 aufgenommen Zustand in einer fahrzeugnahen und einer fahrzeugfernen Position. Die Ballastiervorrichtung 32 entspricht im Wesentlichen den in den Figuren 1 bis 12 gezeigten Ballastiervorrichtungen 32, sodass im Folgenden lediglich auf die Unterschiede eingegangen wird. Figur 13 zeigt eine Ballastiervorrichtung 32 in Offenstellung in der fahrzeugnahen Position, wobei sich die Schwerpunktlage des Schwerpunkts S der Ballastiervorrichtung 32 unterhalb der durch die Aufnahmeinrichtung 48 definierten Schwenkachse 56 angeordnet ist. Figur 14 zeigt eine Ballastiervorrichtung 32 in Offenstellung in der fahrzeugfernen Position, wobei sich die Schwerpunktlage des Schwerpunkts S der Ballastiervorrichtung oberhalb der durch die Aufnahmeinrichtung 48 definierten Schwenkachse 56 angeordnet ist. Die Ballastiervorrichtung 32 kann durch Absenken oder Anheben der Unterlenker 28 in Verbindung mit einem starren oder längenverstellbaren Oberlenker 26 von der fahrzeugnahen in die fahrzeugfernen Position und in alle Position dazwischen verstellt und/oder eingestellt werden. Der Schwerpunkt S des Ballastiergewichts 32 nimmt in der fahrzeugnahen Position eine höhere Schwerpunktlage als in der fahrzeugfernen Position ein. Somit kann vorteilhafterweise die Einstellung des Schwerpunkts S der Ballastiervorrichtung 32 mit der Einstellung der Schwerpunktslage der Ballastiervorrichtung 32 in einem aufgenommenen Zustand der Ballastiervorrichtung 32 in Bezug auf das Fahrzeug kombiniert werden.

## Patentansprüche

1. Ballastiervorrichtung für ein landwirtschaftliches Fahrzeug (10, 12), mit einem Ballastierkörper (34) und einem ersten Ballastierarm (36) und einem zweiten Ballastierarm (40),
wobei der erste Ballastierarm (36) mit dem einen Ende um eine erste Lagerachse (44) schwenkbar am Ballastierkörper (34) gelagert ist und an dessen anderen Ende ein erstes Ballastiergewicht (38) angeordnet ist,
und der zweite Ballastierarm (40) mit dem einen Ende um eine zweite Lagerachse (46) schwenkbar am Ballastierkörper (34) gelagert ist und an dessen anderen Ende ein zweites Ballastiergewicht (42) angeordnet ist,
wobei die Ballastiervorrichtung (32) eine Aufnahmeeinrichtung (48, 50,52) zur Aufnahme der Ballastiervorrichtung (32) mittels einer Dreipunktanhängevorrichtung (22) des landwirtschaftlichen Fahrzeugs (10, 12) aufweist,
und das erste Ballastiergewicht(38) mittels des ersten Ballastierarms (36) und das zweite Ballastiergewicht (42) mittels des zweiten Ballastierarms (40) verstellbar ist.

2. Ballastiervorrichtung nach Anspruch 1, **dadurch gekennzeichnet, dass** die erste und zweite Lagerachse (44, 46) parallel oder räumlich zusammenfallend zueinander angeordnet sind.

3. Ballastiervorrichtung nach Anspruch 1 oder 2, **dadurch gekennzeichnet, dass** die Ballastiervorrichtung (32) eine erste Lagereinrichtung zur Lagerung des ersten Ballastierarms (36) am Ballastierkörper (34) und/oder eine zweite Lagereinrichtung zur Lagerung des zweiten Ballastierarms (40) am Ballastierkörper (34) umfasst.

4. Ballastiervorrichtung nach Anspruch 3, **dadurch gekennzeichnet, dass** die erste Lagereinrichtung ein erstes Befestigungselement (62) und/oder ein erstes Halteelement (60) umfasst und/oder die zweite Lagereinrichtung ein zweites Befestigungselement (66) und/oder ein zweites Halteelement (64) umfasst.

5. Ballastiervorrichtung nach einem der vorangehenden Ansprüche, **dadurch gekennzeichnet, dass** der erste und/oder zweite Ballastierarm (36, 40) und/oder das erste und/oder zweite Halteelement (60, 64) miteinander wirkverbunden sind.

6. Ballastiervorrichtung nach einem der vorangehenden Ansprüche, **dadurch gekennzeichnet, dass** der erste Ballastierarm (36) am einen Ende ein erstes Wirkelement (74) aufweist und der zweite Ballastierarm (40) am einen Ende ein zweites Wirkelement (76) aufweist, wobei das ersten und zweiten Wirkelement (74, 76) miteinander wirkverbunden sind.

7. Ballastiervorrichtung nach einem der vorangehenden Ansprüche, **dadurch gekennzeichnet, dass** die Ballastiervorrichtung (32) einen ersten Aktuator (68) umfasst, mit dem der erste Ballastierarm (36) um die erste Lagerachse (44) verstellbar ist, und/oder die Ballastiervorrichtung (32) einen zweiten Aktuator (78) umfasst, mit dem der zweite Ballastierarm (40) um die zweite Lagerachse (46) verstellbar ist.

8. Ballastiervorrichtung nach einem der vorangehenden Ansprüche, **dadurch gekennzeichnet, dass** die Ballastiervorrichtung (32) einen oder mehrere Anschlagpuffer und/oder eine oder mehrere Arretiereinrichtungen umfasst.

9. Ballastiervorrichtung nach einem der vorangehenden Ansprüche, **dadurch gekennzeichnet, dass** der erste und/oder zweite Ballastierarm (36, 40) als teleskopartige Ballastierarme (36, 40) ausgebildet.

10. Ballastiervorrichtung nach einem der vorangehenden Ansprüche, **dadurch gekennzeichnet, dass** das erste Ballasttiergewicht (38) und/oder das zweite Ballasttiergewicht (42) eines oder mehrere Einzelgewichte umfassen.

11. Landwirtschaftliches Fahrzeug mit einer Ballastiervorrichtung (32) nach einem der Ansprüche 1 bis 10.

12. Landwirtschaftliches Fahrzeug nach Anspruch 11, **dadurch gekennzeichnet, dass** das landwirtschaftliche Fahrzeug (10, 12) eine Dreipunktanhängevorrichtung (22) umfasst, wobei die Ballastiervorrichtung (32) von der Dreipunktanhängevorrichtung (22) aufnehmbar ist, insbesondere aufgenommen ist.

## Claims

1. Ballasting device for an agricultural vehicle (10, 12), having a ballasting body (34) and a first ballasting arm (36) and a second ballasting arm (40),
wherein the first ballasting arm (36) is mounted on the ballasting body (34) so as to be pivotable about a first bearing axis (44) by way of the one end and a first ballasting weight (38) is arranged at the other end thereof,
and the second ballasting arm (40) is mounted on the ballasting body (34) so as to be pivotable about a second bearing axis (46) by way of the one end and a second ballasting weight (42) is arranged at the other end thereof,
wherein the ballasting device (32) comprises a receiving device (48, 50, 52) for receiving the ballasting device (32) by means of a three-point hitch device (22) of the agricultural vehicle (10, 12),
and the first ballasting weight (38) is adjustable by means of the first ballasting arm (36) and the second ballasting weight (42) is adjustable by means of the second ballasting arm (40).

2. Ballasting device according to Claim 1, **characterized in that** the first and second bearing axes (44, 46) are arranged parallel to one another or spatially coinciding with one another.

3. Ballasting device according to Claim 1 or 2, **characterized in that** the ballasting device (32) includes a first bearing device for the bearing arrangement of the first ballasting arm (36) on the ballasting body (34) and/or a second bearing device for the bearing arrangement of the second ballasting arm (40) on the ballasting body (34).

4. Ballasting device according to Claim 3, **characterized in that** the first bearing device includes a first fastening element (62) and/or a first holding element (60) and/or the second bearing device includes a second fastening element (66) and/or a second holding element (64).

5. Ballasting device according to one of the preceding claims, **characterized in that** the first and/or second ballasting arm (36, 40) and/or the first and/or second holding element (60, 64) are operatively connected together.

6. Ballasting device according to one of the preceding claims, **characterized in that** the first ballasting arm (36) comprises a first active element (74) at the one end and the second ballasting arm (40) comprises a second active element (76) at the one end, wherein the first and second active elements (74, 76) are operatively connected together.

7. Ballasting device according to one of the preceding claims, **characterized in that** the ballasting device (32) includes a first actuator (68), with which the first ballasting arm (36) is adjustable about the first bearing axis (44), and/or the ballasting device (32) includes a second actuator (78) with which the second ballasting arm (40) is adjustable about the second bearing axis (46).

8. Ballasting device according to one of the preceding claims, **characterized in that** the ballasting device (32) includes one or multiple stop buffers and/or one or multiple locking devices.

9. Ballasting device according to one of the preceding claims, **characterized in that** the first and/or second ballasting arms (36, 40) are realized as telescopic ballasting arms (36, 40).

10. Ballasting device according to one of the preceding claims, **characterized in that** the first ballasting weight (38) and/or the second ballasting weight (42) include one or multiple individual weights.

11. Agricultural vehicle having a ballasting device (32) according to one of Claims 1 to 10.

12. Agricultural vehicle according to Claim 11, **characterized in that** the agricultural vehicle (10, 12) includes a three-point hitch device (22), wherein the ballasting device (32) is receivable, in particular is received, by the three-point hitch device (22).

## Revendications

1. Dispositif de ballastage pour un véhicule agricole (10, 12), comprenant
un corps de ballastage (34) et un premier bras de ballastage (36) et un deuxième bras de ballastage (40),
le premier bras de ballastage (36) étant monté pivotant par une extrémité autour d'un premier axe de palier (44) sur le corps de ballastage (34), et à l'autre extrémité duquel est disposé un premier poids de ballastage (38),
et le deuxième bras de ballastage (40) est monté pivotant par une extrémité autour d'un deuxième axe de palier (46) sur le corps de ballastage (34), et à l'autre extrémité duquel est disposé un deuxième poids de ballastage (42),
le dispositif de ballastage (32) présentant un dispositif de réception (48, 50, 52) pour recevoir le dispositif de ballastage (32) au moyen d'un dispositif d'attelage trois points (22) du véhicule agricole (10, 12),
et le premier poids de ballastage (38) étant réglable au moyen du premier bras de ballastage (36), et le deuxième poids de ballastage (42) étant réglable au moyen du deuxième bras de ballastage (40).

2. Dispositif de ballastage selon la revendication 1, **caractérisé en ce que** le premier et le deuxième axe de palier (44, 46) sont disposés l'un par rapport à l'autre en parallèle ou en coïncidant dans l'espace.

3. Dispositif de ballastage selon la revendication 1 ou 2, **caractérisé en ce que** le dispositif de ballastage (32) comprend un premier ensemble de palier pour supporter le premier bras de ballastage (36) sur le corps de ballastage (34) et/ou un deuxième ensemble de palier pour supporter le deuxième bras de ballastage (40) sur le corps de ballastage (34).

4. Dispositif de ballastage selon la revendication 3, **caractérisé en ce que** le premier ensemble de palier comprend un premier élément de fixation (62) et/ou un premier élément de maintien (60), et/ou le deuxième ensemble de palier comprend un deuxième élément de fixation (66) et/ou un deuxième élément de maintien (64).

5. Dispositif de ballastage selon l'une quelconque des revendications précédentes, **caractérisé en ce que** le premier et/ou le deuxième bras de ballastage (36, 40) et/ou le premier et/ou le deuxième élément de maintien (60, 64) sont en relation active les uns avec les autres.

6. Dispositif de ballastage selon l'une quelconque des revendications précédentes, **caractérisé en ce que** le premier bras de ballastage (36) présente à une extrémité un premier élément actif (74), et le deuxième bras de ballastage (40) présente à une extrémité un deuxième élément actif (76), le premier et le deuxième élément actif (74, 76) étant en relation active l'un avec l'autre.

7. Dispositif de ballastage selon l'une quelconque des revendications précédentes, **caractérisé en ce que** le dispositif de ballastage (32) comprend un premier actionneur (68) permettant de régler le premier bras de ballastage (36) autour du premier axe de palier (44), et/ou le dispositif de ballastage (32) comprend un deuxième actionneur (78) permettant de régler le deuxième bras de ballastage (40) autour du deuxième axe de palier (46) .

8. Dispositif de ballastage selon l'une quelconque des revendications précédentes, **caractérisé en ce que** le dispositif de ballastage (32) comprend un ou plusieurs tampons de butée et/ou un ou plusieurs équipements d'arrêt.

9. Dispositif de ballastage selon l'une quelconque des revendications précédentes, **caractérisé en ce que** le premier et/ou le deuxième bras de ballastage (36, 40) sont réalisés sous forme de bras de ballastage télescopiques (36, 40).

10. Dispositif de ballastage selon l'une quelconque des revendications précédentes, **caractérisé en ce que** le premier poids de ballastage (38) et/ou le deuxième poids de ballastage (42) comprennent un ou plusieurs poids individuels.

11. Véhicule agricole comprenant un dispositif de ballastage (32) selon l'une quelconque des revendications 1 à 10.

12. Véhicule agricole selon la revendication 11, **caractérisé en ce que** le véhicule agricole (10, 12) comprend un dispositif d'attelage trois points (22), le dispositif de ballastage (32) pouvant être reçu, en particulier étant reçu, par le dispositif d'attelage trois points (22).
